# EUROPEAN PATENT SPECIFICATION

(11) **EP 3 085 959 B1**
(45) Date of publication and mention of the grant of the patent: **27.02.2019**
(21) Application number: 15186411.3
(22) Date of filing: 23.09.2015
(51) Int. Cl.: F04B 1/04, F04B 1/053, F04B 17/02

(54) **RADIAL-PISTON TYPE HYDRAULIC MACHINE, WIND TURBINE GENERATOR HAVING THE SAME, AND METHOD OF MAINTAINING HYDRAULIC MACHINE**
RADIALKOLBENHYDRAULIKMASCHINE, WINDTURBINENGENERATOR DAMIT UND VERFAHREN ZUR ERHALTUNG DER HYDRAULIKMASCHINE
MACHINE HYDRAULIQUE DE TYPE À PISTONS RADIAUX, GÉNÉRATEUR DE TURBINE ÉOLIENNE COMPORTANT CELLE-CI ET PROCÉDÉ DE MAINTIEN D'UNE MACHINE HYDRAULIQUE

(30) Priority: 22.04.2015 JP 2015087277
(43) Date of publication of application: 26.10.2016
(73) Proprietor: MITSUBISHI HEAVY INDUSTRIES, LTD., Tokyo 108-8215 (JP)
(72) Inventor: Sasaki, Masashi, Tokyo, 108-8215 (JP); Ochiai, Hiroyasu, Tokyo, 108-8215 (JP); Uchida, Michiya, Tokyo, 108-8215 (JP)
(74) Representative: Henkel, Breuer & Partner

(56) References cited:
- EP-A1- 2 343 461
- EP-A1- 2 749 769
- WO-A2-2011/104544
- WO-A2-2013/080399
- DE-A1-102011 075 049
- FR-A5- 2 199 352
- US-A1- 2014 128 192

## Description

### TECHNICAL FIELD

The present disclosure relates to a radial-piston type hydraulic machine, a wind turbine generator having the same, and a method of maintaining a hydraulic machine.

### BACKGROUND ART

A radial-piston type hydraulic machine including a plurality of pistons arranged in a radial fashion is conventionally known.

For instance, as a hydraulic transmission of a wind turbine generator, combination of a plurality of hydraulic machines (a hydraulic pump and a hydraulic motor) is known.

For a wind turbine generator, a gearbox has been conventionally used as a drivetrain in many cases. Now, wind turbine generators equipped with a hydraulic transmission including the above hydraulic pump are attracting attention in terms of the weight and cost in accordance with the increase in size of the wind turbine generators.

WO 2014/002522 A and WO 2013/080399 A disclose a radial-piston type hydraulic machine which functions as a drivetrain of a wind turbine generator. The radial-piston type hydraulic machines described in WO 2014/002522 A and WO 2013/080399 A include pistons which reciprocate in cylinders, rollers mounted to the pistons, and a cam with a cam surface contacting the rollers. The preamble portion of claim 1 is based on the document WO 2013/080399 A.

EP 2343461 A1 discloses a bearing arrangement for a rotating shaft of a gear box for a wind turbine generator. The bearing structure comprises a radial first bearing and a radial/axial second bearing spaced apart along the axial length of the rotation shaft. The radial bearing is formed as a double bearing and has an outer race of one of two bearings of the double bearing biased towards the other bearing by means of a spring within a cylindrical sleeve in order to suppress the occurrence of slips in the double bearing structure. The entire sleeve is then supported on a plurality of balls or rollers so as to able to move in the direction of the axis of the output shaft as a unit, thereby functioning as the radial bearing only.

US 2014/0128192 A1 discloses a motor driving force transmission system including an electric motor that generates a motor torque for actuating a differential mechanism portion supported by a pair of roller bearings axially biased by a spring.

DE 10 2011 075 049 A1 discloses a bearing ring for a roller bearing provided with an annular ring containing an integrated sliding supporting material.

### SUMMARY

In a radial-piston type hydraulic machine, a thrust load may be applied to a rotation shaft. Thus, to maintain a relative positional relationship between a rotary part and a stationary part in the axial direction precisely, it is desirable to determine the position using a pair of bearings disposed between the rotary part and the stationary part.

As a way to improve the accuracy of the determination of position by bearings, one may consider applying a preload to an outer ring or an inner ring of each of the bearings.

However, as a result of intensive research conducted by the present inventors, it was found that structural deformation of a hydraulic machine cannot be ignored in a hydraulic machine which needs to be reduced in weight such as a hydraulic transmission for a wind turbine generator, and restricting the position of the outer ring or the inner ring of a bearing for applying a preload may result in a large load applied to the bearing. For instance, in a case where the position of the outer ring or the inner ring of each of the bearings is adjusted by managing the tightening torque of bolts and nuts, the position of the outer ring or the inner ring of the bearing is restricted, which causes an excessive load applied to a rolling element of the bearing when structural deformation occurs in the hydraulic machine.

Especially in a case of a hydraulic machine, a large internal force (piston load) is generated at the rotary part and the stationary part due to a pressure in a hydraulic chamber. Thus, the influence of the structural deformation caused by the internal force is likely to become significant as compared to other general rotary machines.

An object of at least some embodiments of the present invention is to provide a radial-piston hydraulic machine whereby it is possible to determine a position of a rotary part relative to a stationary part in an axial direction, and to restrict a load applied to a bearing when structural deformation occurs, as well as a wind turbine generator having the hydraulic machine and a method of maintaining a hydraulic machine.
(1) A radial-piston type hydraulic machine according to the present invention includes the features of claim 1. The radial-piston type hydraulic machine specifically comprises: a plurality of pistons arranged in a circumferential direction of the hydraulic machine; a cylinder block on which a plurality of cylinders for guiding the respective pistons reciprocably along a radial direction of the hydraulic machine is formed; a first end plate and a second end plate disposed on either side of the cylinder block in an axial direction of the hydraulic machine, the first end plate and the second end plate forming a stationary part of the hydraulic machine together with the cylinder block; a cam shaft including a ring cam disposed so as to face the plurality of pistons; and a first roller bearing and a second roller bearing disposed on opposite ends of the hydraulic machine in the axial direction. The first roller bearing is disposed between the cam shaft and the first end plate. The second roller bearing is disposed between the cam shaft and the second end plate.

Each of the first roller bearing and the second roller bearing includes: a rotary ring fixed to the cam shaft and configured to rotate with the cam shaft; a stationary ring fixed to the first end plate or the second end plate; and a rolling element disposed between the rotary ring and the stationary ring.

The first roller bearing is disposed adjacently to the first end plate in the axial direction, and the stationary ring of the first roller bearing is in contact with the first end plate without a gap in the axial direction.

The second roller bearing is disposed adjacently to the second end plate in the axial direction, and the stationary ring of the second roller bearing is disposed at a distance from the second end plate so as to have a gap in the axial direction.

The hydraulic machine further includes a biasing member for biasing the stationary ring of the second roller bearing toward the first roller bearing in the axial direction. The biasing member is disposed between an end surface of the stationary ring of the second roller bearing and a radial wall surface of the second end plate, the radial wall surface extending along the radial direction so as to face the end surface.

With the above configuration (1), the stationary ring of the first roller bearing is in contact with the first end plate without clearance in the axial direction, while the stationary ring of the second roller bearing is disposed at a distance from the second end plate so as to have a gap in the axial direction, and the biasing member is disposed between the stationary ring of the second roller bearing and the radial wall surface of the second end plate. In this way, the stationary ring of the first roller bearing is forced toward the second roller bearing in the axial direction by the first end plate, while the stationary ring of the second roller bearing is biased toward the first roller bearing in the axial direction by the biasing member. Thus, a preload is applied to the first roller bearing and the second roller bearing, which makes it possible to determine the position of the rotary part (cam shaft) in the axial direction with respect to the stationary part (the first end plate, the second end plate, and the cylinder block) of the hydraulic machine.

Further, the position, in the axial direction, of the stationary ring of the second roller bearing is not completely restricted, and movement of the stationary ring of the second roller bearing is allowed to a certain extent by deformation of the biasing member. As a result, even if structural deformation occurs in the hydraulic machine, it is possible to prevent a load applied to the rolling elements of the first roller bearing and the second roller bearing from becoming excessive.
(2) In the invention, an annular resin sheet is disposed between a circumferential surface of the stationary ring of the second roller bearing and an axial wall surface of the second end plate, the axial wall surface extending along the axial direction so as to face the circumferential surface.

Generally, a rotary ring of a bearing is fixed to a rotary part of a rotary machine by interference fit, while a stationary ring of a bearing is fixed to a stationary part of a rotary machine by clearance fit. If the above general concept is applied to the above hydraulic machine having the configuration (1), the rotary rings of the bearings would be fixed to the rotary part (cam shaft) of the hydraulic machine by interference fit, and the stationary rings of the bearings would be mounted to the stationary part (the first end plate and the second end plate) by clearance fit.

The present inventors actually assembled the hydraulic machine having such configuration and ran several trials, thereby finding out that abrasion occurs between the stationary ring and the second end plate in the second roller bearing in which the stationary ring is biased by the biasing member. The cause of the abrasion is assumed to be the relative movement of the circumferential surface of the stationary ring of the second roller bearing mounted by clearance fit relative to the axial wall surface of the second end plate in accordance with the structural deformation of the hydraulic machine.

In view of this, in the above configuration (2), the annular resin sheet is disposed between the circumferential surface of the stationary ring of the second roller bearing and the axial wall surface of the second end plate. In this way, the circumferential surface of the stationary ring of the second roller bearing and the axial wall surface of the second end plate do not directly contact each other, which makes it possible to restrict wear of the stationary ring of the second roller bearing or the second end plate due to direct slide between the same. Since the stationary ring of the second roller bearing and the second end plate are made of metal (steel), the annular resin sheet having lower hardness than metal may get worn from sliding on one of the above members, but the annular resin sheet can be easily replaced.

Further, the annular resin sheet has a Young's modulus smaller than that of the material (steel) of the stationary ring of the second roller bearing and the second end plate. Thus, it is possible to reduce a local surface pressure applied between the stationary ring of the second roller bearing and the second end plate as compared to a case where metal materials directly contact each other. As a result, it is possible to restrict abrasion due to slide effectively.
(3) In some embodiments, in the above configuration (2), the annular resin sheet is fixed to one of the circumferential surface of the stationary ring of the second roller bearing or the axial wall surface of the second end plate which has a surface with a larger surface roughness.

Normally, if conditions such as a surface pressure and a slipping velocity are the same, the smaller the surface roughness of a sliding surface is the amount of abrasion is small.

In this regard, in the above configuration (3), with the annular resin sheet fixed to one of the circumferential surface of the stationary ring of the second roller bearing or the axial wall surface of the second end plate that has a surface with larger surface roughness, a surface of the another one having a relatively smaller surface roughness forms a sliding surface. As a result, it is possible to restrict abrasion caused by slide even further.
(4) In some embodiments, in the above configuration (2) or (3), the annular resin sheet is fixed to the second end plate.

Normally, while a stationary ring of a bearing is formed by machine processing, a stationary part such as an end plate is formed by casting. Thus, a stationary ring of a bearing normally has a smaller surface roughness than an end plate.

In this regard, in the above configuration (4), the annular resin sheet is fixed to the second end plate so that the circumferential surface of the second roller bearing having a relatively smaller surface roughness becomes the sliding surface. As a result, it is possible to restrict abrasion due to slide effectively.
(5) In some embodiments, in any one of the configurations (2) to (4), the second end plate includes: a first section which forms the axial wall surface; and a second section which forms the radial wall surface, the second section being attached to the first section.

The annular resin sheet includes: a region which is in contact with the circumferential surface of the stationary ring of the second roller bearing; and a region sandwiched and held between the first section and the second section of the second end plate.

With the above configuration (5), the second end plate is dividable into a plurality of sections (the first section and the second section), and a partial region of the annular resin sheet is sandwiched and held between the first section and the second section, which makes it possible to fix the annular resin sheet to the second end plate.

Further, in a case where the circumferential surface of the stationary ring of the second roller bearing has a smaller surface roughness than the axial wall surface of the second end plate, with the annular resin sheet being fixed to the second end plate as in the above configuration (5), the circumferential surface of the second roller bearing having a relatively smaller surface roughness becomes the sliding surface, which makes it possible to restrict abrasion caused by slide effectively.
(6) In some embodiments, in any one of the above configurations (2) to (5), the annular resin sheet includes a plurality of sections divided in the circumferential direction.

In the above configuration (6), with the annular resin sheet divided into a plurality of sections, it is possible to facilitate the assembling work for the annular resin sheet.

Further, with the annular resin sheet divided into a plurality of sections, it is possible to adjust the diameter of the annular resin sheet optionally. Thus, it is possible to apply the annular resin sheet to a plurality of types of hydraulic machines having a second roller bearing of different size by varying the number of sections of the annular resin sheet, which makes it possible to restrict an increase in cost due to additional provision of the annular resin sheet.

In some embodiments, in any one of the above configurations (2) to (6), the annular resin sheet includes at least one of polyamide, polyacetal, polyethylene terephthalate, polyether ether ketone, polytetrafluoroethylene, or polyimide.

Further, in any one of the above configurations (2) to (6), the annular resin sheet may include a solid lubricant containing at least one of graphite, molybdenum disulfide, polytetrafluoroethylene (PTFE), silver or lead in the material. Alternatively, the above solid lubricant may be supported on the sliding surface of the annular resin sheet.

With the above configuration (7), using a material with high abrasion resistance and sliding property such as polyamide, polyoxymethylene, polyethylene terephthalate, polyether ether ketone, polytetrafluoroethylene, or polyimide for the annular resin sheet makes it possible to restrict abrasion due to slide even further.
(8) In some embodiments, in any one of the configurations (1) to (7), the radial-piston type hydraulic machine further includes a high-pressure oil channel communicating with working chambers formed by the pistons and the cylinders, and a low-pressure oil channel through which working oil flows. The working oil has a lower pressure in the low-pressure oil channel than in the high-pressure oil channel. The high-pressure oil channel is disposed inside one of the first end plate or the second end plate and inside the cylinder block.

In the above configuration (8), the high-pressure oil channel of the hydraulic machine is disposed inside one of the end plates and inside the cylinder block. In this way, it is possible to achieve the hydraulic machine having a sufficient strength with respect to a pressure of the working oil in the high-pressure oil channel.
(9) In some embodiments, in the above configuration (8), the one of the end plates and the cylinder block have a fitting region at which the one of the end plates and the cylinder block fit with each other in the axial direction. The high-pressure oil channel includes: an axial flow channel portion extending along the axial direction inside the cylinder block; and a radial flow channel portion extending along the radial direction into the one of the end plates from the axial flow channel portion in the cylinder block in the fitting region of the one of the end plates and the cylinder block. The one of the end plates and the cylinder block are fastened by a plurality of fastening members extending in the radial direction in the fitting region.

In the above configuration (9), the radial flow channel portion of the high-pressure oil channel extends through the fitting region of one of the end plates and the cylinder block. Thus, the pressure of the working oil flowing through the radial flow channel portion acts in a direction to expand a gap, in the radial direction, between one of the end plates and the cylinder block in the fitting region of the same, which is the radial direction. Similarly, an internal force (piston load) generated inevitably due to the characteristics of the hydraulic machine also acts in the radial direction. As described above, since the force caused by the hydraulic pressure acting between one of the end plates and the cylinder block and the internal force (piston load) of the hydraulic machine are in the same direction (since both forces act in the radial direction), it is possible to simplify the fastening structure between the end plates and the cylinder block. In other words, it is basically possible to bear the above two kinds of forces by fastening members oriented in one direction by fastening the end plates and the cylinder block using the fastening members extending in the radial direction in the fitting region.
(10) In some embodiments, in the above configuration (8) or (9), the high-pressure oil channel is disposed so as not to extend across from the cylinder block to other one of the first end plate or the second end plate.

In this way, during maintenance of the hydraulic machine, it is possible to attach or remove the end plate not including the high-pressure oil channel (the other one of the first end plate or the second end plate) easily.
(11) In some embodiments, in any one of the above configurations (8) to (10), the radial-piston type hydraulic machine further includes a high-pressure accumulator supported by one of the cylinder block, the first end plate, or the second end plate, and configured to communicate with the high-pressure oil channel and to restrict pulsation in the high-pressure oil channel.

With the above configuration (11), it is possible to restrict pulsation in the high-pressure oil channel with the high pressure accumulator and to reduce vibration of the hydraulic machine due to the pulsation. Thus, it is possible to secure the strength of the hydraulic machine easily.
(12) In some embodiments, in any one of the above configurations (1) to (11), the cylinder block includes a plurality of segments divided in the circumferential direction. The radial-piston type hydraulic machine further includes a tapered liner disposed between two of the plurality of segments disposed adjacently in the circumferential direction for securing the adjacent two segments with respect to each other in the axial direction.

A shearing force accompanying operation of the hydraulic machine is applied to the segments of the cylinder block of the hydraulic machine and the fastening members for fastening the segments to the end plates.

In view of this, with the above configuration (12), the axial positions of adjacent segments of the cylinder block with respect to each other are restricted by the tapered liners, which makes it possible to secure a sufficient strength against the above shearing force accompanying operation of the hydraulic machine.

In some embodiments, in the above configurations (1) to (12), the hydraulic machine includes an input shaft or an output shaft directly connected to the cam shaft of the hydraulic machine, and the second end plate is disposed on an opposite side of the cylinder block from the input shaft or the output shaft with respect to the axial direction.
(13) A wind turbine generator according to at least some embodiments of the present invention includes: a rotor configured to rotate upon receiving wind; a hydraulic pump configured to be driven by the rotor to produce pressurized oil; and a hydraulic motor driven by the pressurized oil. The hydraulic pump is the radial-piston type hydraulic machine according to any one of the above (1) to (12).

In the above configuration (13), the hydraulic pump has one of the above configurations (1) to (12). Thus, as described above, a preload is applied to the first roller bearing and the second roller bearing, which makes it possible to determine the position of the rotary part (cam shaft) in the axial direction with respect to the stationary part (the first end plate, the second end plate, and the cylinder block) of the hydraulic machine. Further, even if structural deformation occurs in the hydraulic machine, it is possible to prevent a load applied to the rolling elements of the first roller bearing and the second roller bearing from becoming excessive.
(14) In some embodiments, in the above configuration (13), the cam shaft of the hydraulic pump is connected to the rotor directly, and the second end plate is disposed on an opposite side of the cylinder block from the rotor with respect to the axial direction.

In a case where the cam shaft of the hydraulic pump is directly connected to the rotor of the wind turbine generator, the rotor of the wind turbine generator exists in front (a side adjacent to the first end plate) of the hydraulic pump. Thus, it is easier to secure a space for maintenance at the rear side (a side adjacent to the second end plate) of the hydraulic pump.

In this regard, in the above configuration (14), the second end plate is disposed on the opposite side from the rotor across the cylinder block. In this way, it is possible to replace expendable supplies (biasing members, annular resin sheet, etc.) on the side of the second end plate easily utilizing the space for maintenance at the rear of the hydraulic pump.
(15) A method of maintaining a radial-piston type hydraulic machine according to at least some embodiments of the present invention is for the radial-piston type hydraulic machine according to any one of the above (1) to (12). The hydraulic machine includes an input shaft or an output shaft directly connected to the cam shaft of the hydraulic machine, and the second end plate is disposed on an opposite side of the cylinder block from the input shaft or the output shaft with respect to the axial direction. The method includes: a maintenance step of maintaining the hydraulic machine while the second end plate is removed from the cylinder block and at least the first end plate is remaining; and an attachment step of attaching the second end plate to the cylinder block after the maintenance step.

In a case where the cam shaft is directly connected to the input shaft or the output shaft of the hydraulic machine, the input shaft or the output shaft of the hydraulic machine exists in front (a side adjacent to the first end plate) of the hydraulic machine. Thus, it is easier to secure a space for maintenance at the rear side (a side adjacent to the second end plate) of the hydraulic machine.

In this regard, according to the above method (15), the second end plate is disposed on the opposite side from the input shaft or the output shaft across the cylinder block as a premise, and the second end plate is removed when maintenance is performed on the hydraulic machine. Thus, it is possible to utilize the space for maintenance at the rear side of the hydraulic machine to perform maintenance works for the hydraulic machine efficiently.

According to at least one embodiment of the present invention, it is possible to determine a position of a rotary part relative to a stationary part in an axial direction, in a radial-piston type hydraulic machine, and to restrict a load applied to a bearing when structural deformation occurs.

### BRIEF DESCRIPTION OF THE DRAWINGS

FIG. 1 is an overall configuration diagram of a wind turbine generator according to one embodiment.
FIG. 2 is a cross-sectional view of an upper part of a radial-piston type hydraulic machine according to one embodiment.
FIG. 3 is a cross-sectional view, taken in an axial direction, of the second roller bearing illustrated in FIG. 2 and its peripheral structure.
FIG. 4 is a cross-sectional view, taken in a radial direction, of the second roller bearing illustrated in FIG. 2 and its peripheral structure.
FIG. 5 is a cross-sectional view of an upper part of a radial-piston type hydraulic machine according to one embodiment.
FIG. 6 is a partial cross-sectional view (radial cross-sectional view) of a radial-piston type hydraulic machine according to one embodiment.
FIG. 7 is a view as seen in the direction of arrow C of the cylinder block illustrated in FIG. 6.
FIG. 8A is a planar view (an enlarged view of section D of FIG. 7) of a tapered liner according to one embodiment. FIG. 8B is a cross-sectional view of the tapered liner illustrated in FIG. 8A, taken along line E-E. FIG. 8C is a cross-sectional view of the tapered liner illustrated in FIG. 8B, taken along line F-F.
FIG. 9 is a view as seen in the direction of arrow G of the radial-piston type hydraulic machine according to FIG. 2.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

In the present embodiment, a hydraulic pump of a wind turbine generator will be described as an example of a radial-piston type hydraulic machine. However, application of the radial-piston type hydraulic machine according to the present embodiment is not limited to a hydraulic pump for a wind turbine generator, and the radial-piston type hydraulic machine according to the present invention may be applied to a hydraulic motor of a wind turbine generator, or apparatuses other than a wind turbine generator such as an industrial vehicle, an industrial machine, and a device for a ship.

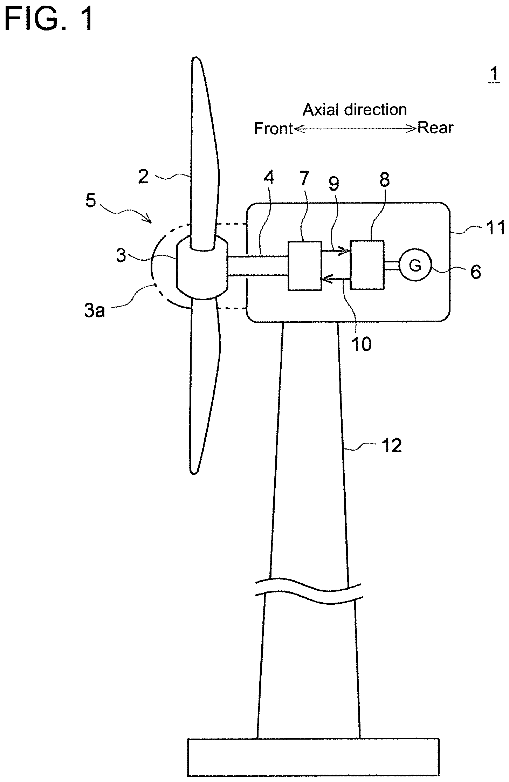

Firstly, with reference to FIG. 1, the overall configuration of a wind turbine generator 1 according to one embodiment will be described. FIG. 1 is an overall configuration diagram of a wind turbine generator according to one embodiment.

As illustrated in FIG. 1, the wind turbine generator 1 according to one embodiment includes a rotor 5 including at least one blade 2, a hub 3 to which the at least one blade 2 is mounted in a radial fashion, and a rotation shaft 4 configured to be capable of rotating integrally with the hub 3. The hub 3 may be covered by a hub cover 3a. The rotor 5 is supported rotatably to a nacelle 11 via a main bearing. The nacelle 11 is mounted to an upper end portion of a tower 12 disposed on ocean or on land.

A hydraulic pump (radial-piston type hydraulic machine) 7 is connected to the rotor 5 via the rotation shaft 4. A hydraulic motor 8 is connected to the hydraulic pump 7 via a high-pressure oil line 9 and a low-pressure oil line 10. Specifically, an outlet of the hydraulic pump 7 is connected to an inlet of the hydraulic motor 8 via the high pressure oil line 9, and an inlet of the hydraulic pump 7 is connected to an outlet of the hydraulic motor 8 via the low pressure oil line 10. The hydraulic pump 7 is driven by the rotation shaft 4 to increase the pressure of working oil, thereby producing high-pressure working oil (pressurized oil). The pressurized oil produced by the hydraulic pump 7 is supplied to the hydraulic motor 8 via the high-pressure oil line 9, and drives the hydraulic motor 8. The low-pressure working oil having performed work in the hydraulic motor 8 is returned again to the hydraulic pump 7 via the low-pressure oil line 10 disposed between the outlet of the hydraulic motor 8 and the inlet of the hydraulic pump 7.

The generator 6 is connected to the hydraulic motor 8. For instance, the generator 6 is a synchronous generator connected to a utility grid and driven by the hydraulic motor 8.

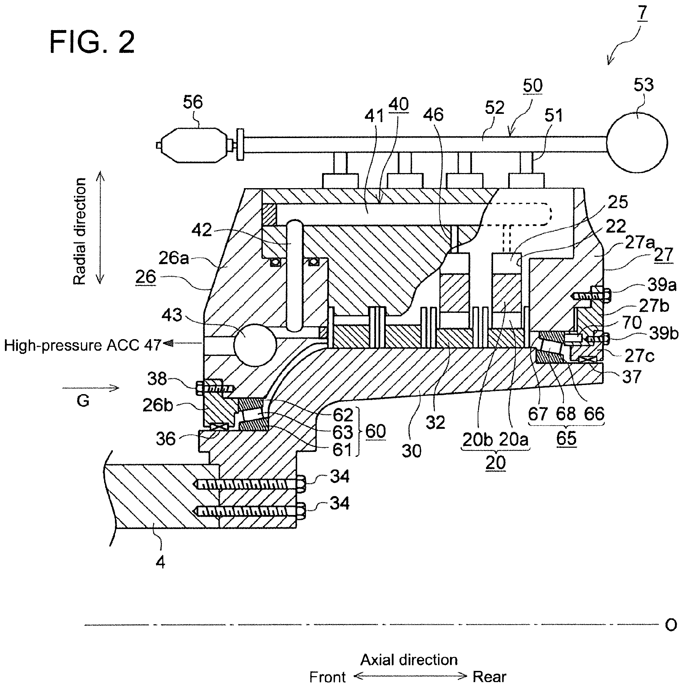

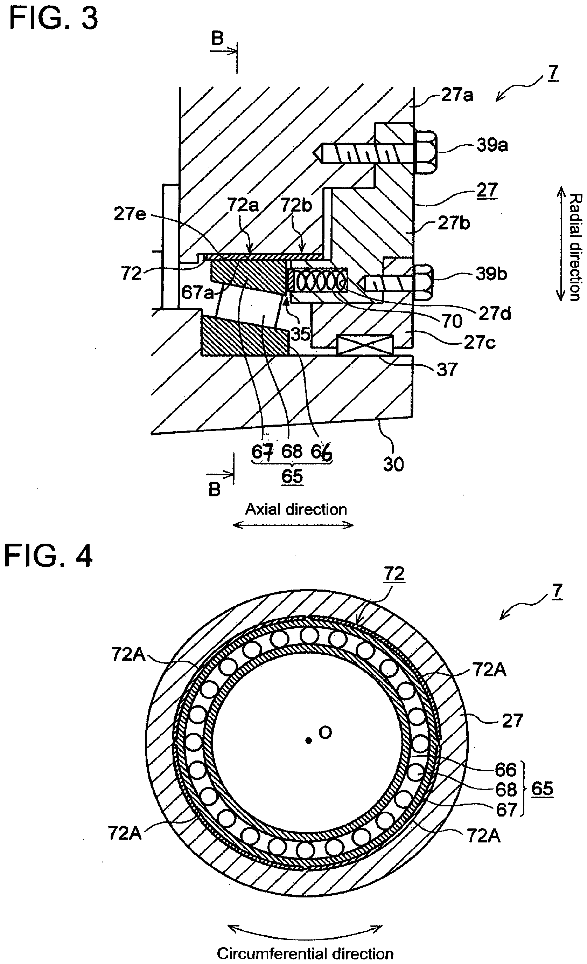

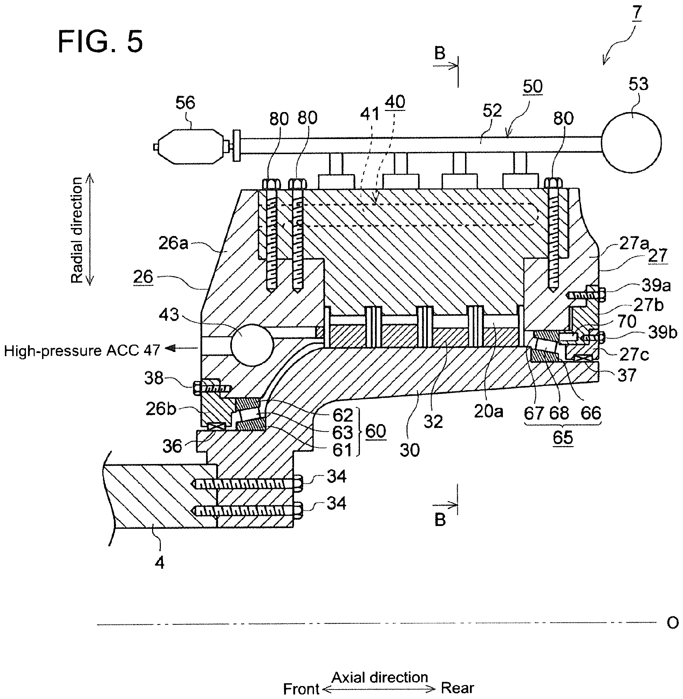

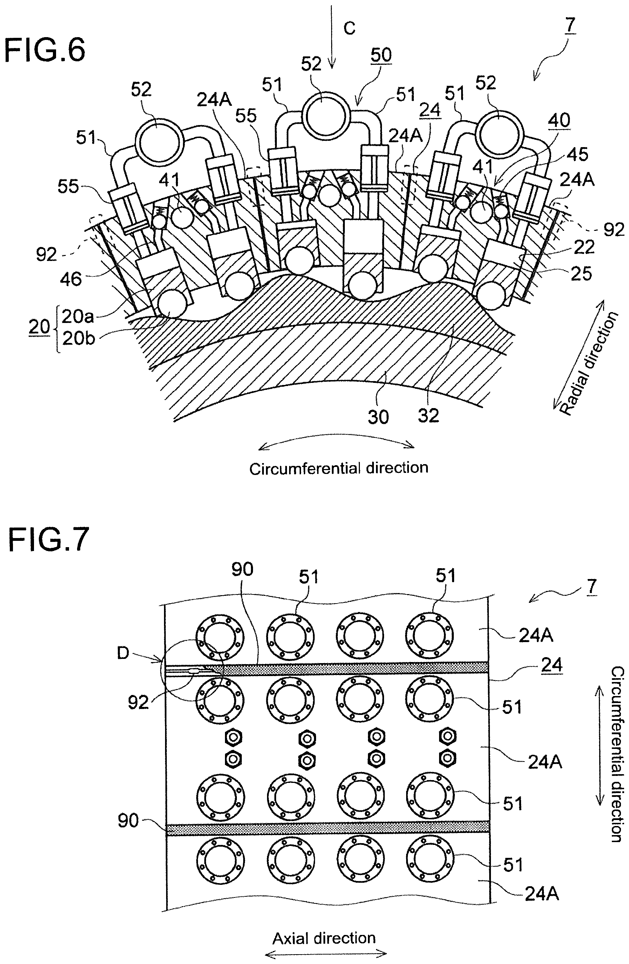

Next, with reference to FIGs. 2, 3, 5 and 6, a radial-piston type hydraulic machine (for example, a hydraulic pump) 7 according to one embodiment will be described. FIG. 2 is a cross-sectional view of an upper part of the radial-piston type hydraulic machine 7 according to one embodiment. In FIG. 2, illustrated is only the upper half section of a cross section of the radial-piston type hydraulic machine 7 along the axial direction. FIG. 3 is a cross-sectional view, taken in an axial direction, of the second roller bearing illustrated in FIG. 2 and its peripheral structure. FIG. 5 is a cross-sectional view of an upper part of the radial-piston type hydraulic machine 7 according to one embodiment. FIG. 6 is a partial cross-sectional view (radial cross-sectional view) of the radial-piston type hydraulic machine 7 according to one embodiment.

As illustrated in FIGs. 2, 5 and 6, the radial-piston type hydraulic machine (hereinafter, referred to merely as a hydraulic machine) 7 includes a plurality of pistons 20 arranged in the circumferential direction, a cylinder block 24 in which a plurality of cylinders 22 is formed, the first end plate 26 and the second end plate 27 disposed on opposite sides of the cylinder block 24 in the axial direction, a cam shaft 30 including a ring cam 32, the first roller bearing 60 disposed between the first end plate 26 and the cam shaft 30, and the second roller bearing disposed between the second end plate 27 and the cam shaft 30. In the present embodiment, a circumferential direction refers to the circumferential direction (rotational direction) of the hydraulic machine 7, an axial direction refers to the axial direction (direction along the rotational axis O) of the hydraulic machine 7, and a radial direction refers to the radial direction of the hydraulic machine 7.

A plurality of pistons 20 is arranged in a radial fashion on the outer side, in the radial direction, of the ring cam 32. In one configuration example, each piston 20 includes a roller 20a contacting the cam surface of the ring cam 32, and a piston body 20b supporting the roller 20a rotatably. The piston body 20b is disposed so as to slide inside corresponding one of the cylinders 22 formed in the cylinder block 24. In another configuration example, each piston 20 includes a ball instead of the roller 20a, and a piston body supporting the ball rotatably.

The cylinder block 24 is disposed on the outer side of the ring cam 32 in the radial direction and arranged so as to extend in an annular shape over the entire circumference of the cam shaft 30. In one configuration example, a plurality of cylinder blocks 24 may be arranged in an annular shape over the entire circumference of the cam shaft 30. At least one cylinder 22, as well as at least one high-pressure oil channel 40 and at least one low-pressure oil channel 50 communicating with at least one working chamber 25 in the at least one cylinder 22, are formed in each of the cylinder blocks 24. For instance, the high-pressure oil channel 40 includes a high-pressure oil communicating portion 46 that extends outward in the radial direction from each of the at least one working chamber 25, an axial flow channel portion 41 communicating with the high-pressure communicating portion 46 and extending along the axial direction inside the cylinder block 24, radial flow channel portions 42 communicating with the axial flow channel portion 41 and extending in the radial direction in the first end plate 26 and the cylinder block 24, and a high-pressure oil manifold portion 43 formed in a substantially annular shape inside the first end plate 26 so as to communicate with the plurality of radial flow channel portions 42. Further, the low-pressure oil channel 50 includes a low-pressure oil communicating portion 51 that extends outward in the radial direction from each of the at least one working chamber 25, axial flow channel pipe portions 52 communicating with the plurality of low-pressure oil communicating portions 51 and extending along the axial direction, and a low-pressure oil manifold portion 53 to which the plurality of axial flow channel pipe portions 52 are connected. The low-pressure oil communicating portion 51 includes a section formed inside the cylinder block 24 and a pipe section formed outside the cylinder block 24. Further, the axial flow channel pipe portions 52 and the low-pressure oil manifold portion 53 are formed outside the cylinder block 24.

The plurality of cylinder blocks 24 may be configured such that each cylinder block 24 is attachable to and detachable from the hydraulic pump 7, and arranged in a circumferential direction. In this case, for each one of the cylinder blocks 24, a plurality of sets may be arranged in the axial direction and the circumferential direction, each set including a cylinder 22, a high-pressure oil channel 40 (specifically, a high-pressure oil communicating portion 46), and a low-pressure oil channel 50 (specifically, a low-pressure oil communicating portion 51). A high-pressure valve 45 is disposed in the high-pressure oil channel 40, so that the high-pressure oil channel 40 communicates with the high-pressure oil line 9 (see FIG. 1) when the high-pressure valve 45 opens. A low-pressure valve 55 is disposed in the low-pressure oil channel 50, so that the low-pressure oil channel 50 communicates with the low-pressure oil line 10 when the low-pressure valve 55 opens.

The ring cam 32 is fixed to the outer circumference of the cam shaft 30 which rotates along with the rotation shaft 4. The ring cam 32 has a cam surface formed in a continuous wavy shape along the circumferential direction, and is disposed in an annular shape so as to surround the entire periphery of the cam shaft 30. A plurality of ring cams 32 may be disposed in the axial direction. The ring cam 32 is not limited to one having a cam surface of a wavy shape, but may have a cam surface of an eccentric cam which has a single cam surface with the center of the ring cam 32 being offset from the center position of the shaft. Further, as described below, the ring cam 32 may include a plurality of segments in the circumferential direction so as to be attachable to and detachable from the hydraulic machine 7.

The first end plate 26 and the second end plate 27 are disposed on the opposite sides, in the axial direction, of the cylinder block 24, and form a stationary part of the hydraulic machine 7 with the cylinder block 24. Further, the first end plate 26 and the second end plate 27 are formed in a substantially disc shape. In one configuration example, the first end plate 26 is disposed on the front side in the axial direction, and the second end plate 27 is disposed on the rear side in the axial direction. In the present embodiment, the front side is a side close to the hub 3 in the axial direction as illustrated in FIG. 1, and the rear side is a side remote from the hub 3 in the axial direction as illustrated in FIG. 1.

A seal member 36 is disposed between the first end plate 26 and the cam shaft 30, and a seal member 37 is disposed between the second end plate 27 and the cam shaft 30, so as to prevent leakage of the working oil to the outside of the hydraulic machine.

Further, an input shaft or an output shaft of the hydraulic machine 7 is directly connected to the cam shaft 30 of the hydraulic machine 7, and the second end plate 27 is disposed on a side opposite to the input shaft or the output shaft across the cylinder block 24 in the axial direction. In the example illustrated in FIG. 1, the input shaft (rotation shaft 4) is directly connected to the cam shaft 30 of the hydraulic machine 7 by fastening members 34, and the second end plate 27 is disposed on a side opposite to the rotation shaft 4 across the cylinder block 24 with respect to the axial direction.

In one embodiment, the hydraulic machine 7 further includes the high-pressure oil channel 40 communicating with the working chamber 25 formed by the piston 20 and the cylinder 22, and the low-pressure oil channel 50 through which low-pressure working oil flows, the working oil having a lower pressure in the low-pressure oil channel 50 than in the high-pressure oil channel 40.

The high-pressure oil channel 40 is disposed inside one of the first end plate 26 or the second end plate 27 and inside the cylinder block 24.

In the above configuration, the high-pressure oil channel 40 of the hydraulic machine 7 is disposed inside one of the end plates 26, 27 and inside the cylinder block 24. In this way, it is possible to achieve the hydraulic machine 7 having a sufficient strength to bear a pressure of the working oil in the high-pressure oil channel 40.

Specifically, one of the end plates 26, 27 and the cylinder block 24 have a fitting region at which the one of the end plates 26, 27 and the cylinder block 24 fit with each other in the axial direction. Further, the high-pressure oil channel 40 includes the axial flow channel portion 41 extending along the axial direction inside the cylinder block 24, and the radial flow channel portions 42 extending along the radial direction from the axial flow channel portion 41 inside the cylinder block 24 into one of the end plates 26, 27, in the fitting region of one of the end plates 26, 27 and the cylinder block 24. Further, one of the end plates 26, 27 and the cylinder block 24 are fastened by a plurality of fastening members (e.g. bolts) 80 extending in the radial direction in the fitting region.

In the above configuration, the radial flow channel portions 42 of the high-pressure oil channel 40 extend through the fitting region of one of the end plates 26, 27 and the cylinder block 24. Thus, the pressure of the working oil flowing through the radial flow channel portions 42 acts in a direction to expand a gap, in the radial direction, between one of the end plates 26, 27 and the cylinder block 24 in the fitting region of the same, which is the radial direction. Similarly, an internal force (piston load) generated inevitably due to the characteristics of the hydraulic machine 7 is in the radial direction. As described above, since the force caused by the hydraulic pressure acting between one of the end plates 26, 27 and the cylinder block 24 and the internal force (piston load) of the hydraulic machine 7 are in the same direction (because both forces act in the radial direction), it is possible to simplify the fastening structure between the end plates 26, 27 and the cylinder block 24. In other words, it is basically possible to bear the above two kinds of forces with fastening members oriented in one direction by fastening the end plates 26, 27 and the cylinder block 24 with fastening members extending in the radial direction in the fitting region.

In this case, the high-pressure oil channel 40 may be disposed so as not to pass between the other one of the first end plate 26 or the second end plate 27 and the cylinder block.

In this way, during maintenance of the hydraulic machine 7, it is possible to attach or remove the end plate not including the high-pressure oil channel 40 (the other one of the first end plate 26 or the second end plate 27) easily.

In one configuration, the first end plate 26 includes the first section 26a disposed adjacently to the cylinder block 24, and the second section 26b disposed radially inside the first section 26a. As illustrated in FIG. 5, the first section 26a includes a step (axial wall surface) on a surface facing the cylinder block 24, and is fixed to the cylinder block 24 by fastening members 80 inserted in the radial direction at this step. The second section 26b is fixed to the first section 26a by the fastening members 38. With this configuration, it is possible to access the first roller bearing 60 by removing only the second section 26b while the first section 26a is still fixed to the cylinder block 24, which makes it possible to perform maintenance on the first roller bearing 60 easily.

Further, the second end plate 27 includes the first section 27a forming an axial wall surface 27e (see FIG. 3), the second section 27b mounted radially inside the first section 27a so as to form a radial wall surface 27d (see FIG. 3), and the third section 27c mounted radially inside the second section 27b. As illustrated in FIG. 5, the first section 27a includes a step (axial wall surface) on a surface facing the cylinder block 24, and is fixed to the cylinder block 24 by the fastening members 80 inserted in the radial direction at this step. The second section 27b is fixed to the first section 27a by fastening members 39a from outside. The third section 27c is fixed to the second section 27b by fastening members 39b from outside. With this configuration, it is possible to access the second roller bearing 65 or a biasing member 70 described below by removing only the second section 27b, or the second section 27b and the third section 27c, while the first section 27a is still fixed to the cylinder block 24. Thus, it is possible to perform maintenance on the second roller bearing 65 or the biasing member 70 easily.

As illustrated in FIGs. 2 and 5, the first roller bearing 60 includes a rotary ring (inner ring) 61 fixed to the cam shaft 30 and configured to rotate with the cam shaft 30, a stationary ring (outer ring) 62 fixed to the first end plate 26, and a rolling element 63 disposed between the rotary ring 61 and the stationary ring 62. The first roller bearing 60 is disposed adjacently to the first end plate 26 in the axial direction.

As illustrated in FIGs. 2, 3 and 5, the second roller bearing 65 includes a rotary ring (inner ring) 66 fixed to the cam shaft 30 and configured to rotate with the cam shaft 30, a stationary ring (outer ring) 67 fixed to the second end plate 27, and a rolling element 68 disposed between the rotary ring 66 and the stationary ring 67. The second roller bearing 65 is disposed at a distance from the second end plate 27 so as to have a gap 35 (see FIG. 3) in the axial direction.

In the illustrated example, the rotary rings 61, 66 are the inner races and the stationary rings 62, 67 are the outer races because the stationary part is disposed on the outer side and the rotary part is disposed on the inner side in the radial direction. However, the configuration is not limited to this. Specifically, in a case where the stationary part is disposed on the inner side and the rotary part is disposed on the outer side in the radial direction, the rotary ring is the outer ring and the stationary ring is the inner ring.

Further, the above hydraulic machine 7 includes a biasing member 70 for biasing the stationary ring 67 of the second roller bearing 65 toward the first roller bearing 60 in the axial direction. The biasing member 70 is disposed between an end surface of the stationary ring 67 of the second roller bearing 65 and the radial wall surface 27d of the second end plate 27 extending along the radial direction so as to face the end surface. As the biasing member 70, a coil spring, a plate spring or the like may be used.

With the above configuration, the stationary ring 62 of the first roller bearing 60 is in contact with the first end plate 26 without clearance in the axial direction, while the stationary ring 67 of the second roller bearing 65 is disposed at a distance from the second end plate 27 so as to have a gap 35 in the axial direction, and the biasing member 70 is disposed between the stationary ring 67 of the second roller bearing 65 and the radial wall surface 27d of the second end plate 27. In this way, the stationary ring 62 of the first roller bearing 60 is forced toward the second roller bearing 65 in the axial direction by the first end plate 26, while the stationary ring 67 of the second roller bearing 65 is biased toward the first roller bearing 60 in the axial direction by the biasing member 70. Thus, a preload is applied to the first roller bearing 60 and the second roller bearing 65, which makes it possible to determine the position of the rotary part (cam shaft 30) in the axial direction with respect to the stationary part (the first end plate 26, the second end plate 27, and the cylinder block 24) of the hydraulic machine 7.

Further, the position, in the axial direction, of the stationary ring 67 of the second roller bearing 65 is not completely restricted, and movement of the stationary ring 67 of the second roller bearing 65 is allowed to a certain extent by deformation of the biasing member 70. As a result, even if structural deformation occurs in the hydraulic machine 7, it is possible to prevent a load applied to the rolling elements 63, 68 of the first roller bearing 60 and the second roller bearing 65 from becoming excessive.

As illustrated in FIG. 3, in one embodiment, the hydraulic machine 7 further includes an annular resin sheet 72 disposed between a circumferential surface 67a of the stationary ring 67 of the second roller bearing 65 and an axial wall surface 27e of the second end plate 27 which extends along the axial direction so as to face the circumferential surface 67a.

Generally, a rotary ring of a bearing is fixed to a rotary part of a rotary machine by interference fit, while a stationary ring of a bearing is fixed to a stationary part of a rotary machine by clearance fit. If the above general concept is applied to the above hydraulic machine 7, the rotary rings 61, 66 of the bearings 60, 65 would be fixed to the rotary part (cam shaft 30) of the hydraulic machine 7 by interference fit, and the stationary rings 62, 67 of the bearings 60, 65 would be mounted to the stationary part (the first end plate 26 and the second end plate 27) of the hydraulic machine 7 by clearance fit.

The present inventors actually assembled the hydraulic machine 7 having the above configuration and ran several trials, thereby finding out that abrasion occurs between the stationary ring 67 and the second end plate 27 in the second roller bearing 65 in which the stationary ring 67 is biased by the biasing member 70. The cause of the abrasion is assumed to be the relative movement of the circumferential surface of the stationary ring 67 of the second roller bearing 65 mounted by clearance fit with respect to the axial wall surface 27e of the end plate 27 in accordance with the structural deformation of the hydraulic machine 7.

In view of this, in the above configuration, the annular resin sheet 72 is disposed between the circumferential surface 67a of the stationary ring 67 of the second roller bearing 65 and the axial wall surface 27e of the second end plate 27. In this way, the circumferential surface 67a of the stationary ring 67 of the second roller bearing 65 and the axial wall surface 27e of the second end plate 27 do not directly contact each other, which makes it possible to restrict wear of the stationary ring 67 of the second roller bearing 65 or the second end plate 27 due to direct slide between the same. Since the stationary ring 67 of the second roller bearing 65 and the second end plate 27 are made of metal (steel), the annular resin sheet 72 having lower hardness than metal may get worn from sliding on one of the above members, but the annular resin sheet 72 can be easily replaced.

Further, the annular resin sheet 72 has a Young's modulus smaller than that of the material (steel) of the stationary ring 67 of the second roller bearing 65 and the second end plate 27. Thus, it is possible to reduce a local surface pressure applied between the stationary ring 67 of the second roller bearing 65 and the second end plate 27 as compared to a case where metal members directly contact each other. As a result, it is possible to restrict abrasion due to slide effectively.

Further, the annular resin sheet 72 may be fixed to one of the circumferential surface of the stationary ring 67 of the second roller bearing 65 or the axial wall surface 27e of the second end plate 27 that has a surface with larger surface roughness than the other one of the circumferential surface or the axial wall surface 27e.

Normally, if conditions such as a surface pressure and a slipping velocity are the same, the smaller the surface roughness of a sliding surface is the amount of abrasion is small.

In this regard, with the annular resin sheet 72 fixed to one of the circumferential surface 67a of the stationary ring 67 of the second roller bearing 65 or the axial wall surface 27e of the second end plate 27 that has a surface with larger surface roughness, a surface of the other one having a relatively smaller surface roughness forms a sliding surface. As a result, it is possible to restrict abrasion caused by slide even further.

Moreover, the annular resin sheet 72 may be fixed to the second end plate 27.

Normally, while a stationary ring of a bearing is formed by machine processing, a stationary part such as an end plate is formed by casting. Thus, a stationary ring of a bearing normally has a smaller surface roughness than an end plate.

In this regard, with the annular resin sheet 72 fixed to the second end plate 27 so that the circumferential surface 67a of the stationary ring 67 of the second roller bearing 65 having a relatively smaller surface roughness becomes the sliding surface, it is possible to restrict abrasion due to slide effectively.

In one embodiment, in a case where the second end plate includes the first section 27a forming the axial wall surface 27e and the second section 27b which is mounted to the first section and which forms the radial wall surface 27d, the annular resin sheet 72 includes a region 72a that contacts the circumferential surface 67a of the stationary ring 67 of the second roller bearing 65 and a region 72b sandwiched and held between the first section 27a and the second section 27b of the second end plate 27.

With the above configuration, the second end plate 27 is configured to be dividable into a plurality of sections (the first section 27a and the second section 27b), and a partial region of the annular resin sheet 72 is sandwiched and held between the first section 27a and the second section 27b, which makes it possible to fix the annular resin sheet 72 to the second end plate 27.

Further, in a case where the circumferential surface 67a of the stationary ring 67 of the second roller bearing 65 has a smaller surface roughness than the axial wall surface 27e of the second end plate 27, with the annular resin sheet 72 fixed to the second end plate 27, the circumferential surface 67a of the stationary ring 67 of the second roller bearing 65 having a relatively smaller surface roughness becomes the sliding surface, which makes it possible to restrict abrasion caused by slide effectively.

FIG. 4 is a cross-sectional view, in a radial direction, of the second roller bearing illustrated in FIG. 2 and its peripheral structure. A cross section in a radial direction refers to a cross section orthogonal to the rotational axis O.

In one embodiment, the annular resin sheet 72 includes a plurality of sections 72A divided in the circumferential direction. In the illustrated example, the annular resin sheet 72 is divided into four sections, thereby including four sections 72A. However, the number of sections 72A of the annular resin sheet 72 is not limited to this.

With the annular resin sheet 72 divided into a plurality of sections 72A as described above, it is possible to facilitate the assembling work for the annular resin sheet 72.

Further, with the annular resin sheet 72 divided into a plurality of sections 72A, it is possible to adjust the diameter of the annular resin sheet 72 optionally. Thus, it is possible to apply the annular resin sheet 72 to a plurality of types of the hydraulic machine 7 having the second roller bearing 65 of different size by varying the number of sections of the annular resin sheet 72, which makes it possible to restrict an increase in cost due to additional provision of the annular resin sheet 72.

Further, in one embodiment, the annular resin sheet 72 includes engineering plastic or super engineering plastic. Specifically, the annular resin sheet 72 includes at least one of polyamide (e.g. 6 nylon), polyoxymethylene (POM), or polyethylene terephthalate (PET), which are engineering plastic, or one of polyether ether ketone (PEEK), polytetrafluoroethylene (PTFE), or polyimide (PI), which are super engineering plastic.

Here, the annular resin sheet 72 may include a solid lubricant containing at least one of graphite, molybdenum disulfide, polytetrafluoroethylene (PTFE), silver or lead in the material. Alternatively, the above solid lubricant may be supported on the sliding surface of the annular resin sheet 72.

As described above, using a material with high abrasion resistance and sliding property such as polyamide, polyoxymethylene, polyethylene terephthalate, polyether ether ketone, polytetrafluoroethylene, or polyimide for the annular resin sheet 72 makes it possible to restrict abrasion due to slide even further.

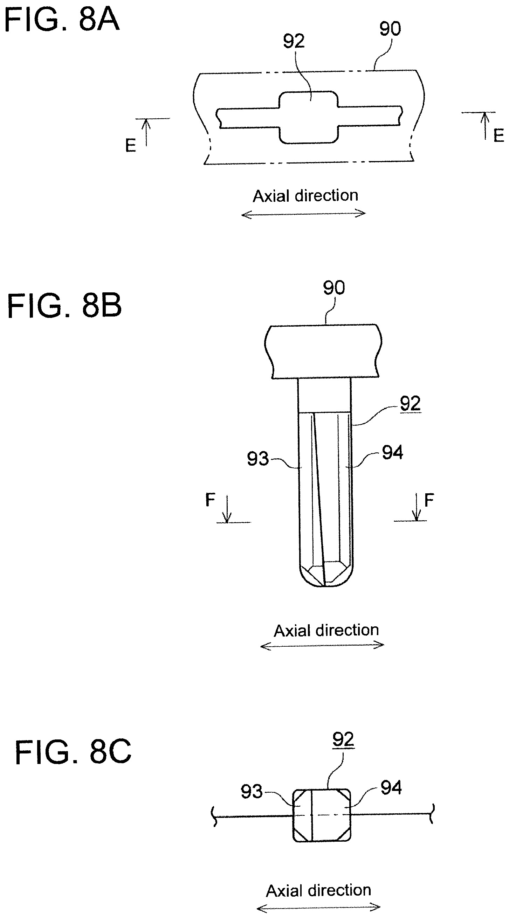

FIG. 7 is a view as seen in the direction of arrow C of a cylinder block illustrated in FIG. 6. FIG. 8A is a planar view (an enlarged view of section D of FIG. 7) of a tapered liner according to one embodiment. FIG. 8B is a cross-sectional view of the tapered liner illustrated in FIG. 8A, taken along line E-E. FIG. 8C is a cross-sectional view of the tapered liner illustrated in FIG. 8B, taken along line F-F.

As illustrated in FIGs. 7, 8A to 8C, in a case of one embodiment where the cylinder block 24 includes a plurality of segments 24A divided in the circumferential direction, the hydraulic machine 7 includes a tapered liner 92, disposed between segments 24A adjacently disposed in the circumferential direction, for restricting the adjacent segments 24A with respect to each other in the axial direction.

A shearing force accompanying operation of the hydraulic machine 7 is applied to the segments 24A of the cylinder block 24 of the hydraulic machine 7 and the fastening members 80 for fastening the segments 24A to the end plates 26, 27.

In view of this, with the above configuration, the positions, in the axial direction, of adjacent segments 24A of the cylinder block 24 with respect to each other are restricted by the tapered liners 92, which makes it possible to secure a sufficient strength to bear the above shearing force accompanying operation of the hydraulic machine 7.

As a configuration example, as illustrated in FIGs. 8A to 8C, the tapered liner 92 may include the first member 93 and the second member 94 arranged adjacently in the axial direction. The first member 93 has a shape such that the width, in the axial direction, decreases in a tapered fashion outwardly in the radial direction. The second member 94 has a shape such that the width, in the axial direction, increases in a tapered fashion outwardly in the radial direction. Thus, it is possible to restrict the positions in the axial direction of adjacent segments 24A of the cylinder block 24 with respect to each other by the tapered liners 92 by arranging the first member 93 and the second member 94 so that the tapered surfaces of the same face and contact each other.

Here, the outer circumferential surface (a section exposed to the outside of the cylinder block 24) of the tapered liner 92 may be covered by a seal member 90.

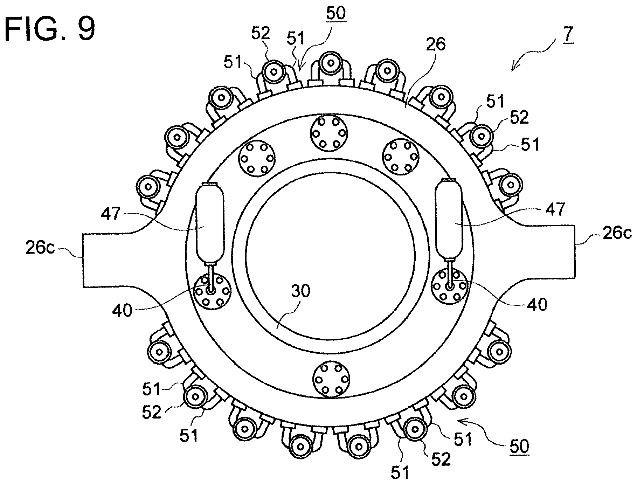

FIG. 9 is a view as seen in the direction of arrow G of the radial-piston type hydraulic machine 7 illustrated in FIG. 2.

In one embodiment, the hydraulic machine 7 further includes a high-pressure accumulator 47 supported by at least one of the cylinder block 24, the first end plate, 26 or the second end plate 27 and configured to communicate with the high-pressure oil channel 40 and restrict pulsation in the high-pressure oil channel 40. In the illustrated example, the high-pressure accumulator 47 is supported to the first end plate 26. In a configuration example, the first end plate 26 includes a pair of torque arms 26c protruding toward opposite sides along the radial direction, and the torque arms 26c prevent rotation of the hydraulic machine 7.

In this way, it is possible to restrict pulsation in the high-pressure oil channel 40 with the high pressure accumulator 47 and to reduce vibration of the hydraulic machine 7 due to the pulsation. Thus, it is possible to secure the strength of the hydraulic machine 7 easily.

As illustrated in FIGs. 2 and 5, a low pressure accumulator 56 may be provided so as to communicate with the low-pressure oil channel 50. In the illustrated example, the low-pressure accumulator 56 is disposed outside the cylinder block 24 and configured to communicate with the axial flow channel pipe portions 52.

Next, a maintenance method for the hydraulic machine 7 according to one embodiment will be described. The input shaft or the output shaft of the hydraulic machine 7 is directly connected to the cam shaft 30 of the hydraulic pump 7, and the second end plate 27 is disposed on the opposite side from the input shaft or the output shaft across the cylinder block 24 with respect to the axial direction. In one embodiment, a method of maintaining the hydraulic machine 7 includes a maintenance step of performing maintenance on the hydraulic machine 7 while the second end plate 27 is removed from the cylinder block 24 and at least the first end plate 26 is remaining, and an attachment step of, after the maintenance step, attaching the second end plate 27 to the cylinder block 24.

In a case where the cam shaft 30 is directly connected to the input shaft or the output shaft of the hydraulic machine 7, the input shaft or the output shaft of the hydraulic machine 7 exists in front (a side adjacent to the first end plate 26) of the hydraulic machine 7. Thus, it is easier to secure a space for maintenance at the rear side (a side adjacent to the second end plate 27) of the hydraulic machine 7.

In this regard, according to the above method, the second end plate 27 is disposed on the opposite side from the input shaft or the output shaft across the cylinder block 24 as a premise, and the second end plate 27 is removed when maintenance is performed on the hydraulic machine 7. Thus, it is possible to utilize a space for maintenance at the rear side of the hydraulic machine 7 to perform maintenance works for the hydraulic machine 7 efficiently.

As described above, according to at least some embodiments of the present invention, it is possible to determine the positions, with respect to the axial directions, of the rotary part (cam shaft 30) relative to the stationary part (the first end plate 26, the second end plate 27, and the cylinder block 24) of the radial-piston type hydraulic machine 7, and it is possible to restrict a load applied to the bearing upon occurrence of structural deformation.

## Claims

1. A radial-piston type hydraulic machine (7), comprising:
a plurality of pistons (20) arranged in a circumferential direction of the hydraulic machine (7);
a cylinder block (24) on which a plurality of cylinders (22) for guiding the respective pistons (20) reciprocably along a radial direction of the hydraulic machine (7) is formed;
a first end plate (26) and a second end plate (27) disposed on either side of the cylinder block (24) in an axial direction of the hydraulic machine (7), the first end plate (26) and the second end plate (27) forming a stationary part of the hydraulic machine (7) together with the cylinder block (24);
a cam shaft (30) including a ring cam (32) disposed so as to face the plurality of pistons (20); and
a first roller bearing (60) and a second roller bearing (65) disposed on opposite ends of the hydraulic machine (7) in the axial direction, the first roller bearing (60) being disposed between the cam shaft (30) and the first end plate (26) and the second roller bearing (65) being disposed between the cam shaft (30) and the second end plate (27),
wherein each of the first roller bearing (60) and the second roller bearing (65) includes:
a rotary ring (61;66) fixed to the cam shaft (30) and configured to rotate with the cam shaft (30);
a stationary ring (62;67) fixed to the first end plate (26) or the second end plate (27); and
a rolling element (63;68) disposed between the rotary ring (61;66) and the stationary ring (62;67),
wherein the first roller bearing (60) is disposed adjacent to the first end plate (26) in the axial direction, and the stationary ring (62) of the first roller bearing (60) is in contact with the first end plate (26) without a gap in the axial direction, and
wherein the second roller bearing (65) is disposed adjacent to the second end plate (27) in the axial direction,
**characterized in that**
the stationary ring (67) of the second roller bearing (65) is disposed at a distance from the second end plate (27) so as to have a gap (35) in the axial direction,
the hydraulic machine (7) further comprises a biasing member (70) for biasing the stationary ring (67) of the second roller bearing (65) toward the first roller bearing (60) in the axial direction, the biasing member (70) being disposed between an end surface of the stationary ring (67) of the second roller bearing (65) and a radial wall surface (27d) of the second end plate (27), the radial wall surface (27d) extending along the radial direction so as to face the end surface, and
an annular resin sheet (72) is disposed between a circumferential surface (67a) of the stationary ring (67) of the second roller bearing (65) and an axial wall surface (27e) of the second end plate (27), the axial wall surface (27e) extending along the axial direction so as to face the circumferential surface (67a).

2. The radial-piston type hydraulic machine (7) according to claim 1,
wherein the annular resin sheet (72) is fixed to one of the circumferential surface (67a) of the stationary ring (67) of the second roller bearing (65) or the axial wall surface (27e) of the second end plate (27) which has a surface with a larger surface roughness.

3. The radial-piston type hydraulic machine (7) according to claim 2,
wherein the annular resin sheet (72) is fixed to the second end plate (27).

4. The radial-piston type hydraulic machine (7) according to any one of claims 1 to 3,
wherein the second end plate (27) includes:
a first section (27a) which forms the axial wall surface (27e); and
a second section (27b) which forms the radial wall surface (27d), the second section (27b) being attached to the first section (27a),
wherein the annular resin sheet (72) includes:
a region which is in contact with the circumferential surface (67a) of the stationary ring (67) of the second roller bearing (65); and
a region sandwiched and held between the first section (27a) and the second section (27b) of the second end plate (27).

5. The radial-piston type hydraulic machine (7) according to any one of claims 1 to 4,
wherein the annular resin sheet (72) includes a plurality of sections (72A) divided in the circumferential direction.

6. The radial-piston type hydraulic machine (7) according to any one of claims 1 to 5,
wherein the annular resin sheet (72) includes at least one of polyamide, polyacetal, polyethylene terephthalate, polyether ether ketone, polytetrafluoroethylene, or polyimide.

7. The radial-piston type hydraulic machine (7) according to any one of claims 1 to 6, further comprising
a high-pressure oil channel (40) communicating with working chambers (25) formed by the pistons (20) and the cylinders (22), and a low-pressure oil channel (50) through which working oil flows, the working oil having a lower pressure in the low-pressure oil channel (50) than in the high-pressure oil channel (40),
wherein the high-pressure oil channel (40) is disposed inside one of the first end plate (26) or the second end plate (27) and inside the cylinder block (24).

8. The radial-piston type hydraulic machine (7) according to claim 7,
wherein the one of the end plates (26,27) and the cylinder block (24) have a fitting region at which the one of the end plates (26,27) and the cylinder block (24) fit with each other in the axial direction,
wherein the high-pressure oil channel (40) includes:
an axial flow channel portion (41) extending along the axial direction inside the cylinder block (24); and
a radial flow channel portion (42) extending along the radial direction into the one of the end plates (26,27) from the axial flow channel portion (41) in the cylinder block (24) in the fitting region of the one of the end plates (26,27) and the cylinder block (24), and
wherein the one of the end plates (26,27) and the cylinder block (24) are fastened by a plurality of fastening members (80) extending in the radial direction in the fitting region.

9. The radial-piston type hydraulic machine (7) according to claim 7 or 8,
wherein the high-pressure oil channel (40) is disposed so as not to extend across from the cylinder block (24) to the other one of the first end plate (26) or the second end plate (27).

10. The radial-piston type hydraulic machine (7) according to any one of claims 7 to 9, further comprising
a high-pressure accumulator (47) supported by one of the cylinder block (24), the first end plate (26), or the second end plate (27), and configured to communicate with the high-pressure oil channel (40) and to restrict pulsation in the high-pressure oil channel (40).

11. The radial-piston type hydraulic machine (7) according to any one of claims 1 to 10,
wherein the cylinder block (24) includes a plurality of segments (24A) divided in the circumferential direction, and
wherein the hydraulic machine (7) further comprises a tapered liner (92) disposed between two of the plurality of segments (24A) disposed adjacently in the circumferential direction for securing the adjacent two segments (24A) with respect to each other in the axial direction.

12. A wind turbine generator (1), comprising:
a rotor (5) configured to rotate upon receiving wind;
a hydraulic pump (7) configured to be driven by the rotor (5) to produce pressurized oil; and
a hydraulic motor (8) driven by the pressurized oil,
wherein the hydraulic pump (7) is the radial-piston type hydraulic machine according to any one of claims 1 to 11.

13. The wind turbine generator (1) according to claim 12,
wherein the cam shaft (30) of the hydraulic pump (7) is directly connected to the rotor (5), and
wherein the second end plate (27) is disposed on an opposite side of the cylinder block (24) from the rotor (5) with respect to the axial direction.

14. A method of maintaining the radial-piston type hydraulic machine (7) according to any one of claims 1 to 11, the hydraulic machine (7) comprising an input shaft or an output shaft directly connected to the cam shaft (30) of the hydraulic machine (7), and the second end plate (27) being disposed on an opposite side of the cylinder block (24) from the input shaft or the output shaft with respect to the axial direction, the method comprising:
a maintenance step of maintaining the hydraulic machine (7) while the second end plate (27) is removed from the cylinder block (24) and at least the first end plate (26) is remaining; and
an attachment step of attaching the second end plate (27) to the cylinder block (24) after the maintenance step.

## Patentansprüche

1. Eine Radialkolbenhydraulikmaschine (7), mit:
einer Vielzahl von Kolben (20), die in einer Umfangsrichtung der Hydraulikmaschine (7) angeordnet sind,
einem Zylinderblock (24), an dem eine Vielzahl von Zylindern (22) zum Führen der jeweiligen Kolben (20) für eine Hin-und-Herbewegung entlang einer Radialrichtung der Hydraulikmaschine (7) ausgebildet ist,
einer ersten Endplatte (26) und einer zweiten Endplatte (27), die an jeder Seite des Zylinderblocks (24) in einer Axialrichtung der Hydraulikmaschine (7) angeordnet sind, wobei die erste Endplatte (26) und die zweite Endplatte (27) ein stationäres Teil der Hydraulikmaschine (7) zusammen mit dem Zylinderblock (24) bilden,
einer Steuerkurvenwelle (30), die eine Ringsteuerkurve (32) aufweist, die so angeordnet ist, dass sie der Vielzahl von Kolben (20) zugewandt ist, und
einem ersten Wälzlager (60) und einem zweiten Wälzlager (65), die an gegenüberliegenden Enden der Hydraulikmaschine (7) in der Axialrichtung angeordnet sind, wobei das erste Wälzlager (60) zwischen der Steuerkurvenwelle (30) und der ersten Endplatte (26) und das zweite Wälzlager (65) zwischen der Steuerkurvenwelle (30) und der zweiten Endplatte (27) angeordnet sind,
wobei das erste Wälzlager (60) und das zweite Wälzlager (65) jeweils aufweist:
einen Drehring (61;66), der an der Steuerkurvenwelle (30) befestigt und konfiguriert ist, um mit der Steuerkurvenwelle (30) zu rotieren,
einen stationären Ring (62;67), der an der ersten Endplatte (26) oder der zweiten Endplatte (27) befestigt ist, und
ein Wälzelement (63;68), das zwischen dem Drehring (61;66) und dem stationären Ring (62;67) angeordnet ist,
wobei das erste Wälzlager (60) angrenzend an die erste Endplatte (26) in der Axialrichtung angeordnet ist, und der stationäre Ring (62) des ersten Wälzlagers (60) in Kontakt mit der ersten Endplatte (26) ohne einen Zwischenraum in der Axialrichtung ist, und
wobei das zweite Wälzlager (65) angrenzend an die zweite Endplatte (27) in der Axialrichtung angeordnet ist,
**dadurch gekennzeichnet, dass**
der stationäre Ring (67) des zweiten Wälzlagers (65) in einer Distanz von der zweiten Endplatte (27) so angeordnet ist, dass ein Zwischenraum (35) in der Axialrichtung besteht,
die Hydraulikmaschine (7) ferner ein Vorbelastungselement (70) zum Vorbelasten des stationären Rings (67) des zweiten Wälzlagers (65) zu dem ersten Wälzlager (60) in der Axialrichtung aufweist, wobei das Vorbelastungselement (70) zwischen einer Endoberfläche des stationären Rings (67) des zweiten Wälzlagers (65) und einer Radialwandoberfläche (27d) der zweiten Endplatte (27) angeordnet ist, wobei die Radialwandoberfläche (27d) sich entlang der Radialrichtung so erstreckt, dass sie der Endoberfläche zugewandt ist, und
eine ringförmige Harzlage (72) zwischen einer Umfangsoberfläche (67a) des stationären Rings (67) des zweiten Wälzlagers (65) und einer axialen Wandoberfläche (27e) der zweiten Endplatte (27) angeordnet ist, wobei die axiale Wandoberfläche (27e) sich entlang der Axialrichtung so erstreckt, dass sie der Umfangsoberfläche (67a) zugewandt ist.

2. Die Radialkolbenhydraulikmaschine (7) gemäß Anspruch 1,
wobei die ringförmige Harzlage (72) an einer von der Umfangsoberfläche (67a) des stationären Rings (67) des zweiten Wälzlagers (65) oder der axialen Wandoberfläche (27e) der zweiten Endplatte (27), die eine Oberfläche mit einer größeren Oberflächenrauheit besitzt, befestigt ist.

3. Die Radialkolbenhydraulikmaschine (7) gemäß Anspruch 2,
wobei die ringförmige Harzlage (72) an der zweiten Endplatte (27) befestigt ist.

4. Die Radialkolbenhydraulikmaschine (7) gemäß einem der Ansprüche 1 bis 3,
wobei die zweite Endplatte (27) aufweist:
einen ersten Abschnitt (27a), der die axiale Wandoberfläche (27e) bildet, und
einen zweiten Abschnitt (27b), der die radiale Wandoberfläche (27d) bildet, wobei der zweite Abschnitt (27b) an dem ersten Abschnitt (27a) angebracht ist,
wobei die ringförmige Harzlage (72) aufweist:
einen Bereich, der in Kontakt mit der Umfangsoberfläche (67a) des stationären Rings (67) des zweiten Wälzlagers (65) ist, und
einen Bereich, der zwischen dem ersten Abschnitt (27a) und dem zweiten Abschnitt (27b) der zweiten Endplatte (27) eingefügt und gehalten ist.

5. Die Radialkolbenhydraulikmaschine (7) gemäß einem der Ansprüche 1 bis 4,
wobei die ringförmige Harzlage (72) eine Vielzahl von Abschnitten (72A) aufweist, die in der Umfangsrichtung unterteilt sind.

6. Die Radialkolbenhydraulikmaschine (7) gemäß einem der Ansprüche 1 bis 5,
wobei die ringförmige Harzlage (72) zumindest eines von Polyamid, Polyacetal, Polyethylenterephthalat, Polyetheretherketon, Polytetrafluorethylen oder Polyimid aufweist.

7. Die Radialkolbenhydraulikmaschine (7) gemäß einem der Ansprüche 1 bis 6, ferner mit
einem Hochdruckölkanal (40), der mit Arbeitskammern (25) kommuniziert, die durch die Kolben (20) und die Zylinder (22) gebildet sind, und einem Niederdruckölkanal (50), durch den Arbeitsöl strömt, wobei das Arbeitsöl einen niedrigeren Druck in dem Niederdruckölkanal (50) als in dem Hochdruckölkanal (40) besitzt,
wobei der Hochdruckölkanal (40) im Inneren von einer der ersten Endplatte (26) oder der zweiten Endplatte (27) und im Inneren des Zylinderblocks (24) angeordnet ist.

8. Die Radialkolbenhydraulikmaschine (7) gemäß Anspruch 7,
wobei die eine der Endplatten (26,27) und der Zylinderblock (24) einen Einsatzbereich haben, an dem die eine der Endplatten (26,27) und der Zylinderblock (24) in der Axialrichtung ineinander passen,
wobei der Hochdruckölkanal (40) aufweist:
einen Axialströmungskanalabschnitt (41), der sich entlang der Axialrichtung im Inneren des Zylinderblocks (24) erstreckt, und
einen Radialströmungskanalabschnitt (42), der sich entlang der Radialrichtung in die eine der Endplatten (26,27) von dem axialen Strömungskanalabschnitt (41) in dem Zylinderblock (24) in dem Einsetzbereich der einen der Endplatten (26,27) und des Zylinderblocks (24) erstreckt, und
wobei die eine der Endplatten (26,27) und der Zylinderblock (24) durch eine Vielzahl von Befestigungselementen (80) befestigt sind, die sich in dem Einsetzbereich in der Radialrichtung erstrecken.

9. Die Radialkolbenhydraulikmaschine (7) gemäß Anspruch 7 oder 8,
wobei der Hochdruckölkanal (40) so angeordnet ist, dass er sich nicht quer von dem Zylinderblock (24) zu der anderen der ersten Endplatte (26) oder der zweiten Endplatte (27) erstreckt.

10. Die Radialkolbenhydraulikmaschine (7) gemäß einem der Ansprüche 7 bis 9, ferner mit
einem Hockdruckspeicher (47), der von einem von dem Zylinderblock (24), der ersten Endplatte (26) oder der zweiten Endplatte (27) getragen ist und der konfiguriert ist, um mit dem Hochdruckölkanal (40) zu kommunizieren und eine Pulsation in dem Hochdruckölkanal (40) zu begrenzen.

11. Die Radialkolbenhydraulikmaschine (7) gemäß einem der Ansprüche 1 bis 10,
wobei der Zylinderblock (24) eine Vielzahl von Segmenten (24A) aufweist, die in der Umfangsrichtung unterteilt sind, und
wobei die Hydraulikmaschine (7) ferner eine verjüngte Auskleidung (92) aufweist, die zwischen zwei der Vielzahl von Segmenten (24A) angeordnet ist, die benachbart in der Umfangsrichtung angeordnet sind, um die benachbarten zwei Segmente (24A) zueinander in der Axialrichtung zu sichern.

12. Ein Windturbinengenerator (1) mit:
einem Rotor (5) der konfiguriert ist, um bei Auftreffen von Wind zu rotieren,
einer Hydraulikpumpe (7), die konfiguriert ist, um durch den Rotor (5) angetrieben zu werden, um Drucköl zu erzeugen, und
einem Hydraulikmotor (8), der durch das Drucköl angetrieben ist,
wobei die Hydraulikpumpe (7) die Radialkolbenhydraulikmaschine gemäß einem der Ansprüche 1 bis 11 ist.

13. Der Windturbinengenerator (1) gemäß Anspruch 12,
wobei die Steuerkurvenwelle (30) der Hydraulikpumpe (7) direkt mit dem Rotor (5) verbunden ist, und
wobei die zweite Endplatte (27) an einer gegenüberliegenden Seite des Zylinderblocks (24) von dem Rotor (5) bezüglich der Axialrichtung angeordnet ist.

14. Ein Verfahren zum Warten der Radialkolbenhydraulikmaschine (7) gemäß einem der Ansprüche 1 bis 11, wobei die Hydraulikmaschine (7) eine Eingangswelle oder eine Ausgangswelle, die direkt mit der Steuerkurvenwelle (30) der Hydraulikmaschine (7) verbunden ist, aufweist, und die zweite Endplatte (27) an einer gegenüberliegenden Seite des Zylinderblocks (24) von der Eingangswelle oder der Ausgangswelle bezüglich der Axialrichtung angeordnet ist, wobei das Verfahren aufweist:
einen Wartungsschritt des Wartens der hydraulischen Maschine (7), während die zweite Endplatte (27) von dem Zylinderblock (24) entfernt ist und zumindest die erste Endplatte (26) verbleibt, und
ein Anbringungsschritt des Anbringens der zweiten Endplatte (27) an dem Zylinderblock (24) nach dem Wartungsschritt.

## Revendications

1. Machine (7) hydraulique de type à pistons radiaux, comprenant :
une pluralité de pistons (20) disposés dans une direction circonférentielle de la machine (7) hydraulique ;
un bloc-cylindre (24), sur lequel est formée une pluralité de cylindres (22) pour guider les pistons (20) respectifs en aller et retour dans une direction radiale de la machine (7) hydraulique ;
un premier flasque (26) et un deuxième flasque (27) disposés de chaque côté du bloc-cylindre (24) dans une direction axiale de la machine (7) hydraulique, le premier flasque (26) et le deuxième flasque (27) formant une partie fixe de la machine (7) hydraulique ensemble avec le bloc-cylindre (24) ;
un arbre (30) à came comportant une came (32) annulaire disposée de manière à faire face à la pluralité de pistons (20) et
un premier palier (60) à rouleaux et un deuxième palier (65) à rouleaux disposés à des extrémités opposées de la machine (7) hydraulique dans la direction axiale, le premier palier (60) à rouleaux étant disposé entre l'arbre (30) à came et le premier flasque (26) et le deuxième palier (65) à rouleaux étant disposé entre l'arbre (30) à came et le deuxième flasque (27),
dans laquelle chacun du premier palier (60) à rouleaux et du deuxième palier (65) à rouleaux comporte :
un anneau (61; 66) tournant fixé à l'arbre (30) à came et configuré pour tourner avec l'arbre (30) à came ;
un anneau (62; 67) fixe fixé au premier flasque (26) ou au deuxième flasque (27) et
un élément (63; 68) de roulement disposé entre l'anneau (61; 66) tournant et l'anneau (62; 67) fixe,
dans laquelle le premier palier (60) à rouleaux est disposé au voisinage du premier flasque (26) dans la direction axiale et l'anneau (62) fixe du premier palier (60) à rouleaux est en contact avec le premier flasque (26) sans un intervalle dans la direction axiale et
dans laquelle le deuxième palier (65) à rouleaux est disposé au voisinage du deuxième flasque (27) dans la direction axiale,
**caractérisée en ce que**
l'anneau (67) fixe du deuxième palier (65) à rouleaux est disposé à distance du deuxième flasque (27) de manière à avoir un intervalle (35) dans la direction axiale,
la machine (7) hydraulique comprend, en outre, un élément (70) de poussée pour pousser l'anneau (67) fixe du deuxième palier (65) à rouleaux vers le premier palier (60) à rouleaux dans la direction axiale, l'élément (70) de poussée étant disposé entre une surface d'extrémité de l'anneau (67) fixe du deuxième palier (65) à rouleaux et une surface (27d) de paroi radiale du deuxième flasque (27), la surface (27d) de paroi radiale s'étendant suivant la direction radiale de manière à faire face à la surface d'extrémité et
une feuille (72) annulaire de résine est disposée entre une surface (67a) circonférentielle de l'anneau (67) fixe du deuxième palier (65) à rouleaux et une surface (27e) de paroi axiale du deuxième flasque (27), la surface (27e) de paroi axiale s'étendant dans la direction axiale de manière à faire face à la surface (67a) circonférentielle.

2. Machine (7) hydraulique de type à pistons radiaux suivant la revendication 1,
dans laquelle la feuille (72) annulaire de résine est fixée à l'une de la surface (67a) circonférentielle de l'anneau (67) fixe du deuxième palier (65) à rouleaux ou de la surface (27e) de paroi axiale du deuxième flasque (27), qui a une surface ayant une grande rugosité de surface.

3. Machine (7) hydraulique de type à pistons radiaux suivant la revendication 2,
dans laquelle la feuille (72) annulaire de résine est fixée au deuxième flasque (27).

4. Machine (7) hydraulique de type à pistons radiaux suivant l'une quelconque des revendications 1 à 3,
dans laquelle le deuxième flasque (27) comprend :
une première partie (27a), qui forme la surface (27e) de paroi axiale et
une deuxième partie (27b), qui forme la surface (27d) de paroi radiale, la deuxième partie (27b) étant fixée à la première partie (27a),
dans laquelle la feuille (72) annulaire de résine comporte :
une région qui est contact avec la surface (67a) circonférentielle de l'anneau (67) fixe du deuxième palier (65) à rouleaux et
une région prise en sandwich et maintenue entre la première partie (27a) et la deuxième partie (27b) du deuxième flasque (27).

5. Machine (7) hydraulique de type à pistons radiaux suivant l'une quelconque des revendications 1 à 4,
dans laquelle la feuille (72) annulaire de résine comporte une pluralité de parties (72a) subdivisées dans la direction circonférentielle.

6. Machine (7) hydraulique de type à pistons radiaux suivant l'une quelconque des revendications 1 à 5,
dans laquelle la feuille (72) annulaire de résine comporte au moins l'un du polyamide, du polyacétal, du poly(téréphtalate d'éthylène), du poly éther cétone, du polytétrafluoroétylhène ou du polyimide.

7. Machine (7) hydraulique de type à pistons radiaux suivant l'une quelconque des revendications 1 à 6, comprenant, en outre,
un canal (40) pour de l'huile à haute pression communiquant avec des chambres (25) de travail formées par les pistons (20) et les cylindres (22) et un canal (50) pour de l'huile à basse pression, dans lesquels passe de l'huile de travail, l'huile de travail ayant une pression plus basse dans le canal (50) pour de l'huile basse pression que dans le canal (40) pour de l'huile haute pression,
dans laquelle le canal (40) pour de l'huile haute pression est disposé à l'intérieur de l'un du premier flasque (26) ou du deuxième flasque (27) et à l'intérieur du bloc-cylindre (24).

8. Machine (7) hydraulique de type à pistons radiaux suivant la revendication 7,
dans laquelle l'un des flasques (26, 27) et du bloc-cylindre (24) a une région d'adaptation où le un des flasques (26, 27) et du bloc-cylindre (24) s'adaptent l'un à l'autre dans la direction axiale,
dans laquelle le canal (40) pour de l'huile à haute pression comporte :
une partie (41) de canal à flux axial s'étendant dans la direction axiale à l'intérieur du bloc-cylindre (24) et
une partie (42) de canal à flux radial s'étendant, suivant la direction radiale dans le un des flasques (26, 27), de la partie (41) de canal à flux axial dans le bloc-cylindre (24) à la région d'adaptation de l'un des flasques (26, 27) et du bloc-cylindre (24) et
dans laquelle le un des flasques (28, 27) et le bloc-cylindre (24) sont fixés par une pluralité d'éléments (80) de fixation s'étendant dans la direction radiale dans la région d'adaptation.

9. Machine (7) hydraulique de type à pistons radiaux suivant la revendication 7 ou 8,
dans laquelle le canal (60) pour de l'huile à haute pression est disposé de manière à ne pas traverser du bloc-cylindre (24) à l'autre du premier flasque (26) ou du deuxième flasque (27).

10. Machine (7) hydraulique de type à pistons radiaux suivant l'une quelconque des revendications 7 à 9, comprenant, en outre,
un accumulateur (7) de haute pression supporté par l'un du bloc-cylindre (24), du premier flasque (26) ou du deuxième flasque (27) et configuré pour communiquer avec le canal (40) pour de l'huile à haute pression et pour restreindre la pulsation dans le canal (40) pour de l'huile à haute pression.

11. Machine (7) hydraulique de type à pistons radiaux suivant l'une quelconque des revendications 1 à 10,
dans laquelle le bloc-cylindre (24) comporte une pluralité de segments (24) subdivisés dans la direction circonférentielle et
dans laquelle la machine (7) hydraulique comprend, en outre, une chemise (92) conique disposée entre deux de la pluralité des segments (24a), disposés en étant voisins dans la direction circonférentielle, pour fixer les deux segments (24a) voisins l'un par rapport à l'autre dans la direction axiale.

12. Eolienne (1), comprenant :
une roue (5) configurée pour tourner en recevant du vent ;
une pompe (7) hydraulique configurée pour être entraînée par la roue (5) afin de produire de l'huile sous pression et
un moteur (8) hydraulique entraîné par l'huile sous pression,
dans laquelle la pompe (7) hydraulique est une machine hydraulique de type à pistons radiaux suivant l'une quelconque des revendications 1 à 11.

13. Eolienne (1) suivant la revendication 12,
dans laquelle l'arbre (30) à came de la pompe (7) hydraulique est relié directement à la roue (5) et
dans laquelle le deuxième flasque (27) est disposé d'un côté du bloc-cylindre (24) opposé au rotor (5) suivant la direction axiale.

14. Procédé d'entretien de la machine (7) hydraulique de type à pistons radiaux suivant l'une quelconque des revendications 1 à 11, la machine (7) hydraulique comprenant un arbre d'entrée ou un arbre de sortie relié directement à l'arbre (30) à came de la machine (7) hydraulique et le deuxième flasque (27) étant disposé d'un côté du bloc-cylindre (24) opposé à l'arbre d'entrée ou à l'arbre de sortie par rapport à la direction axiale, le procédé comprenant :
un stade d'entretien, dans lequel on entretient la machine (7) hydraulique, alors que le deuxième flasque (27) est retiré du bloc-cylindre (24) et alors qu'au moins le premier flasque (26) reste et
un stade de fixation, dans lequel on fixe le deuxième flasque (27) au bloc-cylindre (24) après le stade d'entretien.
